# EUROPÄISCHE PATENTANMELDUNG

(11) **EP 2 851 175 A1**
(43) Veröffentlichungstag der Anmeldung: **25.03.2015**
(21) Anmeldenummer: 14002931.5
(22) Anmeldetag: 23.08.2014
(51) Int. Cl.: B29C 45/74, B29C 45/62, B29C 45/18, B29C 45/78, B29C 45/76

(54) **Spritzgießmaschine**

(30) Priorität: 20.09.2013 DE 202013008299 U; 27.09.2013 DE 202013008591 U
(71) Anmelder: Ferromatik Milacron GmbH, 79364 Malterdingen (DE)
(72) Erfinder: Saum, Rüdiger, 79211 Denzlingen (DE); Saladin, Marco, 79291 Merdingen (DE); Tesche, Marc, 51645 Gummersbach (DE); Thümen, Thorsten, 64625 Bensheim (DE)
(74) Vertreter: Grättinger Möhring von Poschinger Patentanwälte Partnerschaft

(57) **Zusammenfassung**

Bei einer Spritzgießmaschine (1) weist die Spritzeinheit (6) ein im Wesentlichen zylindrisches Gehäuse (8) mit einer darin angeordneten, drehbar und axial verschiebbar angetriebenen Plastifizierschnecke (9) und eine elektrische Heizeinrichtung (11, 12, 13) auf. An das Gehäuse (8) der Spritzeinheit (6) ist im Bereich einer Einzugzone (15) ein Granulatbehälter (16) angeschlossen. Das Gehäuse (8) der Spritzeinheit (6) ist zumindest teilweise dergestalt von einer Einhausung (17) umgeben, dass zwischen dem Gehäuse (8) und der Einhausung (17) ein Hohlraum (18) besteht. Der Hohlraum (18) weist eine Lufteintrittsöffnung (19) und eine Luftaustrittsöffnung (20) auf und ist mittels eines Lüfters (21) zwangsbelüftet. An die Luftaustrittsöffnung (20) ist eine Luftführung (22) angeschlossen, welche im Inneren des Granulatbehälters (16) mit einem Luftauslass (23) mündet. Die Maschinensteuerung (7) umfasst ein Lüftersteuerungsmodul (24) zur automatischen Einstellung des Lüfters (21) in Abhängigkeit von dem Signal mindestens eines an die Maschinensteuerung (7) angeschlossenen Betriebsparameteraufnehmers.

## Beschreibung

Die Erfindung betrifft eine Spritzgießmaschine umfassend einen durch zwei relativ zueinander bewegbare Formaufspannplatten begrenzten Werkzeugeinbauraum, eine auf mindestens eine der Formaufspannplatten wirkende Schließeinheit, mindestens eine Spritzeinheit und eine die Schließeinheit und die Spritzeinheit steuernde Maschinensteuerung, wobei die Spritzeinheit ein im Wesentlichen zylindrisches Gehäuse mit einer darin angeordneten, drehbar und axial verschiebbar angetriebenen Plastifizierschnecke, einer elektrischen Heizeinrichtung und einer Schmelzedüse umfasst und an das Gehäuse im Bereich einer Einzugzone der Spritzeinheit ein Granulatbehälter angeschlossen ist.

Es ist bekannt, bei Spritzgießmaschinen der eingangs genannten Art zur Urformung von Kunststoff-Formteilen dem Gehäuse der Spritzeinheit im Bereich der Einzugszone ein Kunststoff-Granulat aus dem Granulatbehälter zuzuführen. Innerhalb des Gehäuses der Spritzeinheit wird in dem Granulat - durch die sich drehende Plastifizierschnecke - Friktionswärme erzeugt; zusätzliche Wärme wird durch die - typischerweise außen an dem Gehäuse angeordnete - elektrische Heizeinrichtung auf das Granulat übertragen. Das Granulat wird dadurch plastifiziert, und die entstehende Schmelze wird weitergehend auf das erforderliche Temperaturniveau aufheizt bzw. dort gehalten. Während des Plastifizierens wird die rotierende Plastifizierschnecke zurückgezogen, so dass im vorderen Bereich des Gehäuses (Schneckenvorraum) genügend Raum für Schmelze für den nachfolgenden Spritzvorgang zur Verfügung steht. Die Plastifizierschnecke führt - angetrieben durch eine dafür eingerichtete Antriebseinheit - zum Einspritzen der Schmelze in die Form - eine translatorische Bewegung aus und übernimmt dadurch die Funktion eines Kolbens innerhalb des Gehäuses. Beim Spritzvorgang drückt die (i.a. dann nicht mehr rotierende) Plastifizierschnecke Schmelze mit hohem Druck aus dem Schneckenvorraum durch die Schmelzedüse in den Formhohlraum eines Spritzgießwerkzeugs der Spritzgießmaschine. Die Form wird gefüllt und das entstehende Formteil erstarrt. Während der sich anschließenden Erstarrung und Abkühlung entstehende Schwindung an dem Formteil wird durch von der Plastifizierschnecke nachgedrückte Schmelze kompensiert. Nach ausreichender Abkühlung kann das Werkzeug mittels der Schließeinheit geöffnet und das fertige Formteil entnommen werden. Die vorstehend beschriebenen Verfahrensschritte werden typischerweise vollautomatisch mittels einer die Schließeinheit und die Spritzeinheit - sowie sonstige Komponenten wie beispielsweise Auswerfer etc. - steuernden Maschinensteuerung durchgeführt.

Das Plastifizieren des Granulats erfordert im erheblichen Umfang Energie insbesondere für den Antrieb der Plastifizierschnecke und die elektrische Heizeinrichtung. So geht ein nennenswerter Anteil der Herstellungskosten für ein typisches Kunststoff-Spritzgießteil auf den Verbrauch elektrischer Energie zurück. Sowohl unter ökonomischen als auch unter ökologischen Gesichtspunkten wäre eine höhere Effizienz, d.h. ein geringerer Verbrauch an elektrischer Energie wünschenswert.

Die Aufgabe der Erfindung ist es daher, eine Spritzgießmaschine der eingangs genannten Art bereitzustellen, welche sich durch eine gegenüber dem Stand der Technik gesteigerte Effizienz auszeichnet.

Die Aufgabe wird durch eine Spritzgießmaschine gemäß Anspruch 1 gelöst.

Die erfindungsgemäße Spritzgießmaschine zeichnet sich neben den eingangs genannten Merkmalen demnach dadurch aus, dass das Gehäuse der Spritzeinheit zumindest teilweise dergestalt von einer Einhausung umgeben ist, dass zwischen dem Gehäuse und der Einhausung ein Hohlraum besteht. Der Hohlraum weist eine Lufteintrittsöffnung und eine Luftaustrittsöffnung auf und ist mittels eines Lüfters zwangsbelüftet. An die Luftaustrittsöffnung ist eine Luftführung angeschlossen, welche im Inneren des Granulatbehälters mit einem Luftauslass mündet. Außerdem umfasst die Maschinensteuerung ein Lüftersteuerungsmodul zur automatischen Einstellung des Lüfters in Abhängigkeit von dem Signal eines an die Maschinensteuerung angeschlossenen Betriebsparameteraufnehmers.

Mit der erfindungsgemäßen Spritzgießmaschine ist es möglich, in dem Granulatbehälter befindliches Granulat vorzuwärmen, indem ein sich im Bereich der elektrischen Heizeinrichtung in dem zwischen dem Gehäuse und der Einhausung bestehenden Hohlraum erwärmender und in den Granulatbehälter geleiteter Luftstrom Wärme an in dem Granulatbehälter befindliches Granulat abgibt. Der Luftstrom wird dabei mittels des Lüfters aktiv erzeugt und durch die Luftführung in das Innere des Granulatbehälters eingeleitet. Durch die Vorwärmung des Granulats kann insbesondere die zu dessen Plastifizierung in der Spritzeinheit notwendige Friktionsarbeit durch die Plastifizierschnecke substantiell verringert werden. Dementsprechend reduziert sich insbesondere im beachtlichen Umfang die elektrische Leistungsaufnahme des Drehantriebs der Plastifizierschnecke. Als weitere Folge ergibt sich auch eine reduzierte mechanische Beanspruchung des Antriebs der Plastifizierschnecke mit der Konsequenz einer (kostenmindernd) erhöhten Lebensdauer. Der Wärmeeintrag in das Granulat in dem Granulatbehälter durch den in diesen eingeleiteten Warmluftstrom ist - infolge der vergleichsweise großen Oberfläche des Granulats - ausgesprochen effizient. Indem bei der erfindungsgemäßen Spritzgießmaschinen für die Vorerwärmung des Granulats in dem Granulatbehälter typischerweise in erster Linie ansonsten an die Umgebung abgegebene Abwärme der Spritzeinheit herangezogen wird, strahlt die erfindungsgemäße Spritzgießmaschine weniger Abwärme ab als eine leistungsmäßig vergleichbare Spritzgießmaschine nach dem Stand der Technik, wodurch sich auch die Arbeitsbedingungen in der Produktionsstätte verbessern und/oder Kosten und Energie für deren Klimatisierung einsparen lassen. Im Einzelfall, nämlich wenn für den jeweiligen Herstellungsprozess die für das Plastifizieren des Granulats erforderliche Zeit der limitierende Faktor ist, kann die vorliegende Erfindung sogar zu einer (effizienzsteigernden) Verkürzung des Arbeitszyklus' beitragen, weil die Vorerwärmung des Granulats zu einer verkürzten erforderlichen Verweildauer des Granulats in der Spritzeinheit führt.

Um die gezielte Bereitstellung eines Warmluftstroms zu ermöglichen ist erfindungsgemäß vorgesehen, dass die Einhausung das Gehäuse der Spritzeinheit zumindest teilweise derart umgibt, dass zwischen dem Gehäuse und der Einhausung ein Hohlraum besteht. Durch den Hohlraum ist mittels des Lüfters ein Luftstrom im Sinne einer Zwangsbelüftung führbar, welcher durch die Eintrittsöffnung in den Hohlraum gelangt, dort besonders bevorzugt außen an der (typischerweise außen an dem Gehäuse anliegenden) elektrischen Heizeinrichtung bzw. dem heißen Gehäuse entlang strömt und durch die Austrittsöffnung austritt. Besonders vorteilhaft ist es dabei, wenn die Einhausung das Gehäuse der Spritzeinheit wenigstens im Bereich der elektrischen Heizeinrichtung umgibt, um dadurch einen besonders hohen Anteil der Abwärme der elektrischen Heizeinrichtung an den Luftstrom übertragen zu können.

Der Luftstrom kann aufgrund der Zwangsbelüftung aus der Luftaustrittsöffnung des Hohlraums austreten, durch die Luftführung geführt werden und über deren Luftauslass in den Granulatbehälter gelangen, um dort Wärme an das Granulat abzugeben. Besonders bevorzugt mündet die Luftführung in dem Granulatbehälter möglichst nahe der Einzugszone der Spritzeinheit, wodurch ermöglicht wird, dass mittels des Warmluftstroms erwärmtes Granulat vor seiner Plastifizierung in dem Gehäuse der Spritzeinheit besonders wenig der zuvor aufgenommenen Wärme wieder abgibt. Zudem lässt sich in diesem Falle eine effizienzsteigernde Gegenstrom-Wärmeübertragung von dem Luftstrom auf den Granulatstrom realisieren.

Von erheblicher Bedeutung für die hohe Effizienz der erfindungsgemäßen Spritzgießmaschine ist auch, dass der Lüfter mittels eines - von der Maschinensteuerung umfassten - Lüftersteuerungsmoduls automatisch und in Abhängigkeit vom Signal eines an die Maschinensteuerung angeschlossenen Betriebsparameteraufnehmers eingestellt wird. Die gezielte aktive Beeinflussung des Luftstromes gestattet mit geringen Aufwand sowie hoher Reaktionsgeschwindigkeit und Wirksamkeit die Optimierung der energetischen Verhältnisse innerhalb der Spritzgießmaschine und deren Komponenten. Das Lüftersteuerungsmodul ermöglicht dabei insbesondere durch eine geeignete Einstellung des Lüfters in Abhängigkeit von dem Signal eines an die Maschinensteuerung angeschlossenen Betriebsparameteraufnehmers, dass Wärme an den Luftstrom abgegeben werden kann, welche nicht für die Erwärmung des Granulats in der Spritzeinheit und/oder die weitergehende Temperaturerhöhung der Schmelze benötigt wird bzw. zur Verfügung steht. Dadurch leistet die erfindungsgemäße Spritzgießmaschine über eine reine Energierückgewinnung von Abwärme der elektrischen Heizeinrichtung und der Plastifizierschnecke hinausgehend einen maximalen Beitrag zu einer bisher nicht bekannten Effizienz beim Einsatz von Spritzgießmaschinen zur Herstellung von Kunststoff-Formteilen.

Die Größe des Luftvolumen- bzw. -massenstroms, welcher durch den Hohlraum und die Luftführung geführt wird, ist mittels der Lüftersteuerung der Maschinensteuerung regulierbar, welche dazu eingerichtet ist, von mindestens einem Betriebsparameteraufnehmer erhaltene Signale zu verarbeiten, welche insbesondere Messwerte und/oder Einstellwerte repräsentieren können. Die Beeinflussung des Luftstromes wirkt sich dabei mehrfach auf den Wärmehaushalt aus, unter anderem (angesichts unterschiedlicher Strömungsgeschwindigkeiten) auf die Wärmeübertragung von der Heizeinrichtung auf den Luftstrom sowie von diesem auf das Granulat. Bevorzugt können in einer Speichereinheit der Maschinensteuerung, insbesondere des Lüftersteuerungsmoduls unterschiedliche Werte beispielsweise über eine dazu eingerichtete Eingabeeinheit hinterlegt werden, welche das Lüftersteuerungsmodul insbesondere mit von dem Betriebsparameteraufnehmer empfangenen Messwerten vergleichen kann. Auf Basis eines solchen Vergleichs kann das Lüftersteuerungsmodul selbstständig den Lüfter einstellen, insbesondere die Lüfterdrehzahl variieren bzw. den Lüfter abstellen (Lüfterdrehzahl = 0 n/s) oder die Einschaltdauer des Lüfters verändern, wodurch der LuftVolumenstrom regulierbar ist. Die erfindungsgemäße Lüftersteuerung ermöglicht insbesondere auch bei instationären Betriebszuständen der Spritzgießmaschine, beispielsweise während Phasen des Anfahrens bzw. Herunterfahrens, eine energetische und/oder prozesstechnische Optimierung.

Das Lüftersteuerungsmodul bietet den Vorteil, dass die Abführung von Wärme aus dem Hohlraum mittels Einstellung des Luft-Volumenstroms gesteuert werden kann, wodurch insbesondere eine übermäßige Wärmeabfuhr verhindert werden kann, welche dazu führen würde, dass ein Temperaturabfall in der Plastifizierzone entstünde bzw. sich die Einschaltdauer der elektrischen Heizeinheiten erhöhen und die durch die Wärmerückgewinnung erzielte Wirkungsgradsteigerung wieder verringert würde. Umgekehrt bietet die Erfindung die Möglichkeit, die elektrische Heizeinrichtung der Spritzeinheit aktiv und gezielt für die Vorwerwärmung des dieser zugeführten Granulats einzusetzen, d.h. für ein über eine Abwärmenutzung hinausgehendes energetisches Konzept. In diesem Sinne ist, gemäß einer bevorzugten Weiterbildung der Erfindung, möglich, dass in die Steuerung der Heizeinrichtung durch hierzu vorgesehene Heizungssteuerung Messwerte betreffend die Temperatur des Granulats in dem Granulatbehälter einfließen. Der Heizungssteuerung wird in diesem Falle nicht nur ein die Schmelzetemperatur im Schneckenvorraum repräsentierendes, durch einen dort angeordneten Sensor ermitteltes Temperatursignal zugeführt, sondern auch ein die Granulattemperatur im Granulatbehälter repräsentierendes, durch einen dort angeordneten Sensor ermitteltes Temperatursignal. Der Lüftersteuerung werden in diesem Falle als Eingangsgrößen, d.h. als zu berücksichtigende Betriebsparameter, typischerweise das die Granulattemperatur repräsentierende Signal des betreffenden Temperatursensors sowie die (von der Heizungssteuerung vorgegebene) Einschaltdauer der Heizeinrichtung und/oder ein die Schmelzetemperatur repräsentierende Signal eines betreffenden Temperatursensors zugeführt.

Gemäß einer ersten weitergebildeten Ausführungsform ist vorgesehen, dass die Maschinensteuerung ein Heizungssteuerungsmodul zur automatischen Einstellung der elektrischen Heizeinrichtung, beispielsweise zur Einstellung der Einschaltdauer und/oder der Leistungsaufnahme der elektrischen Heizeinrichtung, in Abhängigkeit von dem Signal eines an die Maschinensteuerung angeschlossenen Temperatursensors umfasst. Der Temperatursensor ermittelt bevorzugt die Schmelzetemperatur im Schneckenvorraum (s.o.). Hierdurch kann das Heizungssteuerungsmodul - im Sinne einer hohen Effizienz - die Heizleistung bzw. Einschaltdauer der elektrischen Heizeinrichtung besonders präzise an den tatsächlichen Bedarf anpassen, wie er für die Bereitstellung einer spritzfähigen Schmelze optimaler Temperatur und Viskosität besteht. Bevorzugt können in einer Speichereinheit der Maschinensteuerung Temperaturwerte, beispielsweise werkstoffbezogene Plastifizierungs-Temperaturwerte, beispielsweise über eine dazu eingerichtete Eingabeeinheit hinterlegt werden, welche das Heizungssteuerungsmodul insbesondere mit von dem Temperatursensor empfangenen Messwerten vergleichen kann. Auf Basis eines solchen Vergleichs kann das Heizungssteuerungsmodul insbesondere die Einschaltdauer und/oder Leistung der elektrischen Heizeinrichtung an die sich durch die steuerbare Zwangsbelüftung ändernden Temperaturniveaus innerhalb der Spritzgießmaschine anpassen, wodurch ein weiterer Beitrag zur Einsparung von Energie geleistet und/oder eine energetisch flexible Prozessführung (s.o.) unterstützt wird.

Gemäß einer weiteren vorteilhaften Ausführungsform ist vorgesehen, dass der Betriebsparameteraufnehmer zur Erfassung der (durch das Heizungssteuerungsmodul vorgegebenen) Einschaltdauer der Heizeinrichtung und/oder der Temperatur im Bereich der Plastifizierzone der Spritzeinheit ausgeführt ist. Hierdurch kann besonders sicher verhindert werden, dass zu viel Wärme aus der Plastifizierzone abgeführt wird. Hierzu kann der Betriebsparameteraufnehmer insbesondere dazu eingerichtet sein, eine übermäßig starke Erhöhung der Einschaltdauer und/oder einen übermäßig starken Abfall der Temperatur innerhalb der Plastifizierzone festzustellen und daraufhin die Drehzahl des Lüfters zu verringern bzw. den Lüfter abzustellen. Dafür können in einer Speichereinheit der Systemsteuerung und/oder der Lüftersteuerung Zeitwerte im Zusammenhang mit der maximal zulässigen Einschaltdauer der elektrischen Heizeinheit und/oder Temperaturwerte im Zusammenhang mit Höchst- und Mindesttemperaturen innerhalb der Plastifizierzone hinterlegt sein, auf welche das Lüftersteuerungsmodul zugreifen kann und welche es mit den durch den Betriebsparameteraufnehmer erfassten Werten vergleichen kann, um auf Basis eines solchen Vergleichs die Drehzahl des Lüfters zu variieren.

Weiter oben wurde bereits dargelegt, dass vorteilhafterweise ein die Temperatur innerhalb des Granulatbehälters erfassender, als Betriebsparameteraufnehmer fungierender Temperatursensor vorgesehen ist, dessen Messwert dem Lüftersteuerungsmodul zugeführt wird. Das durch diesen Temperatursensor bereitgestellte Temperatursignal wird in dem Lüftersteuerungsmodul (und ggf. dem Heizungssteuerungsmodul) auch dazu verwendet, um eine Überhituzung (und somit Verklumpung) des Granulats in dem Granulatbehälter zu verhindern. Besonders bevorzugt können in diesem Zusammenhang in einer Speichereinheit der Maschinensteuerung und/oder des Lüftersteuerungsmoduls maximal in dem Granulatbehälter zulässige Temperaturwerte hinterlegt werden, welche das Lüftersteuerungsmodul mit den von dem Temperatursensor empfangenen Messwerten, welche innerhalb des Granulatbehälters erfasste Temperaturen repräsentieren, vergleichen kann. Sofern das Lüftersteuerungsmodul in einem solchen Vergleich feststellt, dass die erfasste Temperatur die maximal zulässige Temperatur überschreitet, kann es insbesondere selbstständig die Lüfterdrehzahl verringern bzw. den Lüfter ganz abstellen

(Lüfterdrehzahl = 0 n/s), wodurch der Luftvolumenstrom verringert bzw. vollständig unterbunden wird. Besonders vorteilhaft kann der Temperatursensor zwischen dem Luftauslass der Luftführung und der Einzugszone der Spritzeinheit positioniert sein, von wo aus der Temperatursensor erfassen kann, welche Temperatur das durch die Zwangsbelüftung im vorstehend beschriebenen Sinne erwärmte Granulat in dem Granulatbehälter hat, bevor es der Plastifizierschnecke zugeführt wird. Diese Ausführungsform leistet somit einen Beitrag, dass die maximal in dem Granulatbehälter zulässige Temperatur nicht überschritten wird, wodurch insbesondere verhindert werden kann, dass Granulat bereits innerhalb des Granulatbehälters angeschmolzen wird.

Gemäß einer bevorzugten Weiterbildung der Erfindung mündet in die Luftführung ein Kaltlufteintritt. Durch diesen hindurch kann in die Luftführung (nicht erwärmte) Umgebungsluft eintreten, welche anschließend mit der durch den Hohlraum hindurch angesaugten, in diesem erwärmten Luft vermischt wird. Der Luftdurchsatz durch den Kaltlufteintritt ist dabei besonders bevorzugt mittels einer von der Maschinensteuerung angesteuerten Einrichtung einstellbar, insbesondere in Abhängigkeit von einem Temperatursignal bzw. Temperaturmesswert bestreffend die Temperatur des in den Granulatbehälter eingeleiteten Luftstromes. Bei einer solchen Spritzgießmaschine besteht eine (zusätzliche) Möglichkeit, die Temperatur des in den Granulatbehälter eingeleiteten Luftstromes wirksam nach oben zu begrenzen, was sich im Interesse der Betriebssicherheit der Spritzgießmaschine als außerordentlich günstig erweisen kann. Denn von der Möglichkeit, mittels einer solchen (durch entsprechende Programmierung der Maschinensteuerung automatisch gesteuerten) Beimengung von Kaltluft die Temperatur des aus dem Hohlraum angesaugten Luftstromes zu reduzieren, kann insbesondere dann Gebrauch gemacht werden, wenn - bei bestimmten Betriebszuständen - die Temperatur des aus dem Hohlraum angesaugten, in den Granulatbehälter eingeleiteten Luftstromes ohne derartige Kühlung einen solchen Wert erreicht bzw. zu erreichen droht, dass ein Anschmelzen des Granulats in dem Granulatbehälter zu befürchten ist. Indem ein solches Anschmelzen, welches ein Verklumpen des Granulats im Granulatbehälter nach sich ziehen könnte, zuverlässig vermieden wird, ergibt sich - im Sinne einer hohen wirtschaftlichen Effizienz - eine hohe Zuverlässigkeit der Spritzgießmaschine. Auch unmittelbar energetisch effizienzsteigernde Effekte sind bei dieser Weiterbildung realisierbar; denn durch die Möglichkeit, die Temperatur des in den Granulatbehälter eingeleiteten Luftstromes durch die mehr oder weniger ausgeprägte Zumischung von Kaltluft zu dem in dem Hohlraum erwärmten Luftstrom einzustellen, kann die Menge der in den Granulatbehälter eingeblasenen Luft (und somit die Luftströmungsgeschwindigkeit) freier gewählt und insbesondere im Hinblick auf die Strömungsverhältnisse in dem Granulatbehälter sowie die Wärmeübertragung auf das Granulat optimiert werden. Mit anderen Worten: Die Optimierung des aus dem Hohlraum angesaugten Luftstromes im Hinblick auf die bestmögliche Nutzung der Abwärme insbesondere der Heizeinrichtung und die Optimierung des in den Granulatbehälter eingeblasenen Luftstromes im Hinblick auf einen bestmöglichen Wärmeeintrag in das Granulat lassen sich bei dieser Weiterbildung entkoppeln.

Besonders bevorzugt mündet der vorstehend dargelegte Kaltlufteintritt in den stromaufwärts des Lüfters, d.h. zwischen diesem und dem Hohlraum angeordneten Teil der Luftführung. Dies hat mehrere Vorteile. Zum einen kommt diese Weiterbildung ohne einen zusätzlichen Lüfter (Kaltluftgebläse) aus; denn auch die Kaltluft wird, soweit die von der Maschinensteuerung angesteuerten Einrichtung einen Kaltluftdurchsatz freigibt, von dem Lüfter angesaugt. Weiterhin erfolgt in dem Lüfter eine innige Durchmischung der in dem Hohlraum erwärmten Luft und der Kaltluft, so dass heiße Luftsträhnen wirksam vermieden werden. Aufgrund dieser - zu einer hohen Temperaturhomogenität führenden - innigen Vermischung von erwärmter Luft und Kaltluft kann die Temperatur der in den Granulatbehälter eingeleiteten Luftströmung selbst dann ohne Sicherheitsabstände auf die energetisch optimale Temperatur geführt werden, wenn diese nur vergleichsweise geringfügig unterhalb der Temperatur liegt, bei welcher ein Anschmelzens des Granulats im Granulatbehälter nicht mehr ausgeschlossen werden kann.

Weiterhin kann, gemäß einer wiederum anderen Weiterbildung der Erfindung, die Luftführung außerhalb des Granulatbehälters isoliert ausgeführt sein, wodurch die Wärmeabgabe eines durch die Luftführung geleiteten Luftstroms, welcher sich zuvor in dem Hohlraum erwärmt hat, innerhalb des Abschnitts der Lüftführung, welcher sich außerhalb des Granulatbehälters befindet, besonders gering gehalten werden und der Luftstrom besonders viel Wärme an Granulat in dem Granulatbehälter abgeben kann.

Die Luftführung kann weiterhin besonders vorteilhaft innerhalb des Granulatbehälters isoliert ausgeführt sein, wodurch ermöglicht werden kann, dass ein Luftstrom, welcher sich im Hohlraum erwärmt hat und durch den Abschnitt der Luftführung außerhalb des Granulatbehälters geleitet worden ist, in dem Abschnitt der Luftführung innerhalb des Granulatbehälters besonders wenig Wärme abgibt und somit Granulat im Bereich des Luftauslasses der Luftführung besonders stark erwärmen kann. Diese Ausführungsform leistet einen Beitrag, Granulat örtlich besonders zielgerichtet zu erwärmen.

Vorteilhafterweise ist der Lüfter im Bereich der Luftführung angeordnet, beispielsweise in diese integriert. Durch eine derartige Anordnung kann ein Luftstrom besonders effektiv durch den Hohlraum und die Luftführung geleitet werden, wobei ein Sog in dem Hohlraum und ein Druck in dem dem Lüfter nachgeschalteten Bereich der Luftleitung erzeugt wird, wodurch Luft besonders gut durch die Lufteintrittsöffnung in den Hohlraum angesaugt und durch den Luftauslass der Luftführung in den Granulatbehälter ausgestoßen werden kann.

Gemäß einer weiteren Ausführungsform ist vorteilhafterweise vorgesehen, dass die Lufteintrittsöffnung benachbart der Schmelzedüse angeordnet ist. Hierdurch ist es möglich, dass ein durch die Lufteintrittsöffnung in den Hohlraum eintretender Luftstrom über besonders lange Abschnitte entlang der elektrischen Heizeinheit und des Gehäuses der Spritzeinheit geführt wird und dabei besonders viel Wärme aufnehmen kann.

Schließlich ist es besonders vorteilhaft, wenn innerhalb des Hohlraums Luftleitelemente angeordnet sind, wodurch eine besonders effektive Kanalisierung eines durch den Hohlraum geleiteten Luftstroms möglich ist und insbesondere Verwirbelungen des Luftstroms verringert werden können. Umgekehrt ist mittels solcher Luftleitelemente indessen beispielsweise auch eine gezielte Drallbeaufschlagung der Luftströmung möglich, welche sich im Sinne einer möglichst homogenen Temperaturverteilung ausgleichend auswirkt.

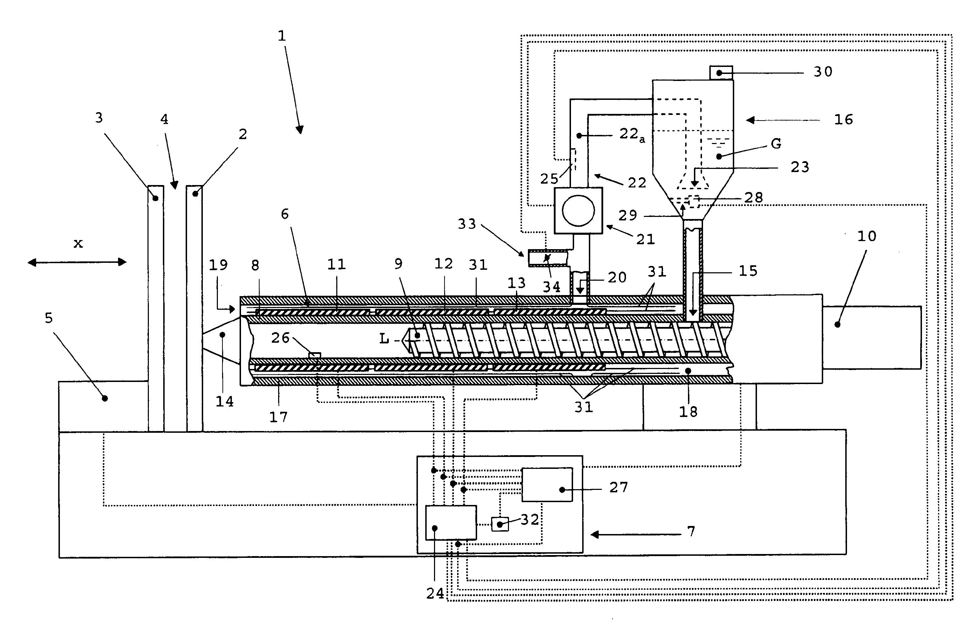

Nachfolgend wird ein Ausführungsbeispiel der Erfindung anhand der Zeichnung näher erläutert. Diese zeigt schematisch eine teilweise geschnittene Seitenansicht einer Ausführungsform einer erfindungsgemäßen Spritzgießmaschine.

Die in der Zeichnung dargestellte Spritzgießmaschine 1 umfasst eine erste feste Formaufspannplatte 2 und eine zweite in Richtung des Doppelpfeils x mittels der Schließeinrichtung 5 bewegliche Formaufspannplatte 3. Die beiden Formaufspannplatten 2, 3 begrenzen zusammen einen Werkzeugeinbauraum 4. Die Spritzgießmaschine 1 weist ferner eine Spritzeinheit 6 sowie eine die Schließeinrichtung 5 und die Spritzeinheit 6 steuernde Maschinensteuerung 7 auf, welche dazu mit der Schließeinrichtung 5 und der Spritzeinheit 6 kommunikativ verbunden ist. Alle kommunikativen Verbindungen, welche z.B. mittels Datenleitungen oder kabelloser Funkverbindungen hergestellt werden können, zwischen Elementen der dargestellten erfindungsgemäßen Spritzgießmaschine 1 sind in der Zeichnung durch gepunktete Linien symbolisiert.

Die Spritzeinheit 6 umfasst ein im Wesentlichen zylindrisches Gehäuse 8, in welchem eine Plastifizierschnecke 9 angeordnet ist, welche entlang ihrer Längsachse L und um diese herum mittels einer Antriebseinheit 10 drehbar und axialverschiebbar ist. Weiterhin weist die Spritzeinheit 6 eine elektrische Heizeinrichtung in Form dreier außen an dem Gehäuse anliegender Heizbänder 11, 12, 13 und eine Schmelzedüse 14 auf. An das Gehäuse 8 ist im Bereich einer Einzugszone 15 ein Granulatbehälter 16 angeschlossen.

Eine im Wesentlichen zylindrische Einhausung 17 umgibt das Gehäuse 8 der Spritzeinheit 6 mit einem solchen Abstand, dass zwischen der Einhausung 17 und dem Gehäuse 8 ein Hohlraum 18 gebildet wird. Dieser weist eine zu der Schmelzedüse 14 benachbarte Lufteintrittsöffnung 19 sowie eine Luftaustrittsöffnung 20 auf. An die Luftaustrittsöffnung ist eine Luftführung 22 angeschlossen, in welche ein Lüfter 21 integriert ist, mittels dessen der Hohlraum 18 zwangsbelüftet ist. Der Lüfter 21 ist dazu eingerichtet, einen Sog in dem Hohlraum 18 zu erzeugen. Die Einhausung 17 besteht entweder aus einem Wärme isolierenden Material oder weist eine nicht dargestellte Schicht aus Wärme isolierendem Material auf. Wesentlich ist, dass die Einhausung 17 nach außen gegen Wärmeabgabe isoliert ist. An ihrer Innenwandung weist die Einhausung 17 weiterhin mehrere im Wesentlichen axial und parallel zueinander verlaufende sowie in Richtung der Luftaustrittsöffnung 20 auslaufende, als Leitelemente dienende, erhabene Rippen 31 auf, welche einen durch die Lufteintrittsöffnung 19 ansaugbaren Luftstrom entlang der äußeren Oberfläche der Heizbänder 11, 12, 13 in Richtung der Luftaustrittsöffnung 20 leiten. Auf seinem Weg durch den Hohlraum 18 kann der Luftstrom Wärme, im erfindungsgemäßen Sinne insbesondere Abwärme der Heizbänder 11, 12, 13 und ggf. des aufgeheizten Gehäuses 8 aufnehmen.

Die Luftführung 22 mündet im Inneren des Granulatbehälters 16 mit einem Luftauslass 23. Sie ist innerhalb und außerhalb des Granulatbehälters 16 wärmeisoliert ausgeführt, indem sie im Wesentlichen aus einem wärmeisolierten Rohr 22ₐ besteht. Der Lüfter 21 ist dazu eingerichtet, in dem nachgeordneten Abschnitt der Luftführung 22 einen Überdruck zu erzeugen, so dass ein durch die Luftaustrittsöffnung 20 aus dem Hohlraum 18 angesaugter Luftstrom, welcher auf seinem Weg durch den Hohlraum in der zuvor beschriebenen Weise Wärme aufgenommen hat, über den Luftauslass 23 der Luftführung 22 in den Granulatbehälter 16 gelangt, das Granulat G durchströmt und dort zu dessen Erwärmung Wärme an das Granulat G abgeben kann. Die Luftführung 22 mündet hierbei in dem unteren Bereich des Granulatbehälters 16 in der Nähe der Einzugszone 15 der Spritzeinheit 6. Die Luft strömt anschließend in dem Granulatbehälter 16 nach oben, d.h. der Förderrichtung des Granulats G entgegen.

Die Maschinensteuerung 7 umfasst ein Lüftersteuerungsmodul 24 zur automatischen Einstellung des Lüfters 21 in Abhängigkeit von Signalen von an die Maschinensteuerung 7 kommunikativ angeschlossenen Betriebsparameteraufnehmern. Letztere sind insbesondere realisiert durch einen Temperatursensor 25 innerhalb der Luftführung 22, einen Temperatursensor 26 zur Messung der Schmelzetemperatur im Schneckenvorraum und einen Temperatursensor 28, mit welchem die Temperatur innerhalb des Granulatbehälters 16 erfasst werden kann; und nachdem auch die Einschaltdauer der Heizbänder 11, 12, 13 in der Lüftersteuerung als Betriebsparameter berücksichtigt wird, stellt der (auch kommunikativ mit dem Lüftersteuerungsmodul 24 verbundene) Schaltausgang des - ebenfalls von der Maschinensteuerung 7 umfassten - Heizungssteuerungsmoduls 27 einen weiteren Betriebsparameteraufnehmer im vorliegenden Sinne dar.

Der Temperatursensor 28 ist über eine an der Innenwandung des Granulatbehälters 16 befestigte Halterung 29 zwischen dem Luftauslass 23 der Luftführung 22 und der Einzugszone 15 der Spritzeinheit 6 positioniert. So wird durch den Temperatursensor 28 die Temperatur des in dem Granulatbehälter 16 bevorrateten Granulats G an der Stelle maximaler Temperatur ermittelt.

Das Heizungssteuerungsmodul 27 ist insbesondere dazu eingerichtet, aufgrund des von dem im Schneckenvorraum angeordneten Temperatursensor 26 bereitgestellten Temperatursignals die Beaufschlagung Heizbänder 11, 12, 13 zu steuern, insbesondere deren Heizleistung bzw. deren Einschaltdauer automatisch so einzustellen, dass die Schmelze im Schneckenvorraum eine optimale Temperatur (und Viskosität) aufweist. In dem weiter oben beschriebenen Sinne ist allerdings auch der Temperatursensor 28 kommunikativ mit dem Heizungssteuerungsmodul 27 verbunden. Der Messwert dieses Temperatursensors kann bedarfsweise in dem Heizungssteuerungsmodul 27 beispielsweise dergestalt verwendet werden, dass die Heizleistung der Heizeinrichtung 11, 12, 13 speziell für eine verstärkte Vorwärmung des Granulats G erhöht wird, typischerweise bei gleichzeitiger Erhöhung des Luftdurchsatzes durch den Hohlraum 18 durch entsprechende Ansteuerung des Lüfters 21.

In einer Speichereinheit 32 der Maschinensteuerung 7 sind insbesondere
- Temperaturwerte im Zusammenhang mit
   - der maximal zulässigen Temperatur des Granulats G innerhalb des Granulatbehälters 16 und
   - der Mindest- und Höchsttemperatur (oder der Solltemperatur samt Bandbreite) der Schmelze im Schneckenvorraum, sowie
- Zeitwerte im Zusammenhang mit der maximal zulässigen Einschaltdauer der Heizbänder 11, 12, 13 hinterlegt.

Das Lüftersteuerungsmodul 24 und das Heizungssteuerungsmodul 27 sind dazu eingerichtet, die auf der Speichereinheit 32 hinterlegten Werte mit von den Betriebsparameteraufnehmern erhaltenen Messwerten zu vergleichen und auf Basis eines solchen Vergleichs den Lüfter 21 (insbesondere dessen Drehzahl) bzw. die Heizbänder 11, 12, 13 (insbesondere deren Heizleistung und Einschaltdauer) automatisch einzustellen. Hierdurch können insbesondere Kannibalisierungseffekte vermieden werden, welche sich dadurch ergeben könnten, dass durch die Zwangsbelüftung des Hohlraums 18 nicht nur Abwärme, welche nicht für die Plastifizierung nutzbar ist, sondern auch für die Plastifizierung vorgesehene Wärme abgeführt wird.

In die Luftführung 22, und zwar in deren stromaufwärts des Lüfters 21 angeordneten Teil, mündet einen Kaltlufteintritt 33. Diesem ist eine von der Maschinensteuerung 7, beispielsweise dessen Lüftersteuerungsmodul 24 angesteuerte Einrichtung 34 zugeordnet, die dem Einstellen des Luftdurchsatzes durch den Kaltlufteintritt dient und beispielsweise klappenförmig ausgeführt ist.

Der Granulatbehälter 16 weist eine Entlüftungseinheit 30 auf, welche der kontrollierten, ggf. gereinigten und/oder schallgedämpften Luftabfuhr aus dem Granulatbehälter 16 dient.

## Patentansprüche

1. Spritzgießmaschine, umfassend einen durch zwei relativ zueinander bewegbare Formaufspannplatten (2, 3) begrenzten Werkzeugeinbauraum (4), eine auf mindestens eine der Formaufspannplatten wirkende Schließeinheit (5), mindestens eine Spritzeinheit (6) und eine die Schließeinheit (5) und die Spritzeinheit (6) steuernde Maschinensteuerung (7), wobei die Spritzeinheit (6) ein im Wesentlichen zylindrisches Gehäuse (8) mit einer darin angeordneten, drehbar und axial verschiebbar angetriebenen Plastifizierschnecke (9), einer elektrischen Heizeinrichtung (11, 12, 13) und einer Schmelzedüse (14) umfasst und an das Gehäuse (8) im Bereich einer Einzugzone (15) der Spritzeinheit (6) ein Granulatbehälter (16) angeschlossen ist, mit den folgenden Merkmalen:
das Gehäuse (8) der Spritzeinheit (6) ist zumindest teilweise dergestalt von einer Einhausung (17) umgeben, dass zwischen dem Gehäuse (8) und der Einhausung (17) ein Hohlraum (18) besteht;
der Hohlraum (18) weist eine Lufteintrittsöffnung (19) und eine Luftaustrittsöffnung (20) auf und ist mittels eines Lüfters (21) zwangsbelüftet;
an die Luftaustrittsöffnung (20) ist eine Luftführung (22) angeschlossen, welche im Inneren des Granulatbehälters (16) mit einem Luftauslass (23) mündet;
die Maschinensteuerung (7) umfasst ein Lüftersteuerungsmodul (24) zur automatischen Einstellung des Lüfters (21) in Abhängigkeit von dem Signal mindestens eines an die Maschinensteuerung (7) angeschlossenen Betriebsparameteraufnehmers.

2. Spritzgießmaschine nach Anspruch 1, **dadurch gekennzeichnet, dass** die Maschinensteuerung (7) ein Heizungssteuerungsmodul (27) zur automatischen Einstellung der Heizeinrichtung (11, 12, 13) in Abhängigkeit von dem Signal mindestens eines an die Maschinensteuerung (7) angeschlossenen Temperatursensors (26, 28) umfasst.

3. Spritzgießmaschine nach Anspruch 2, **dadurch gekennzeichnet, dass** als Temperatursensor ein die Temperatur im Bereich der Plastifizierzone bzw. des Schneckenvorraums der Spritzeinheit (6) erfassender Temperatursensor (26) vorgesehen ist.

4. Spritzgießmaschine nach Anspruch 2 oder Anspruch 3, **dadurch gekennzeichnet, dass** das Heizungssteuerungsmodul (27) zur automatischen Einstellung der Einschaltdauer der Heizeinrichtung (11, 12, 13) ausgeführt ist.

5. Spritzgießmaschine nach einem der Ansprüche 1 bis 4, **dadurch gekennzeichnet, dass** der/die Betriebsparameteraufnehmer die Einschaltdauer der Heizeinrichtung (11, 12, 13) erfasst und/oder zur Erfassung der Schmelzetemperatur im Bereich der Plastifizierzone bzw. des Schneckenvorraums der Spritzeinheit (6) ausgeführt ist.

6. Spritzgießmaschine nach einem der Ansprüche 1 bis 5, **dadurch gekennzeichnet, dass** ein die Temperatur innerhalb des Granulatbehälters (16) erfassender Temperatursensor (28) vorgesehen ist, dessen Messwert dem Lüftersteuerungsmodul (24) zugeführt wird.

7. Spritzgießmaschine nach einem der Ansprüche 1 bis 6, **dadurch gekennzeichnet, dass** die Luftführung (22) innerhalb und/oder außerhalb des Granulatbehälters (16) isoliert ausgeführt ist.

8. Spritzgießmaschine nach einem der Ansprüche 1 bis 7, **dadurch gekennzeichnet, dass** der Lüfter (21) im Bereich der Luftführung (22) angeordnet, insbesondere in diese integriert ist.

9. Spritzgießmaschine nach einem der Ansprüche 1 bis 8, **dadurch gekennzeichnet, dass** die Lufteintrittsöffnung (19) benachbart der Schmelzedüse (14) angeordnet ist.

10. Spritzgießmaschine nach einem der Ansprüche 1 bis 9, **dadurch gekennzeichnet, dass** innerhalb des Hohlraums (18) Luftleitelemente (31) angeordnet sind.

11. Spritzgießmaschine nach einem der Ansprüche 1 bis 10, **dadurch gekennzeichnet, dass** in die Luftführung (22) ein Kaltlufteintritt (33) mündet.

12. Spritzgießmaschine nach Anspruch 11, **dadurch gekennzeichnet, dass** dem Kaltlufteintritt (33) eine von der Maschinensteuerung (7) angesteuerte, dem Einstellen des Luftdurchsatzes dienende Einrichtung (34) zugeordnet ist.

13. Spritzgießmaschine nach Anspruch 12, **dadurch gekennzeichnet, dass** die dem Einstellen des Luftdurchsatzes dienende Einrichtung (34) von der Maschinensteuerung in Abhängigkeit von einem Temperatursignal bzw. Temperaturmesswert einstellbar ist.

14. Spritzgießmaschine nach einem der Ansprüche 11 bis 13, **dadurch gekennzeichnet, dass** der Kaltlufteintritt (33) in den stromaufwärts des Lüfters angeordneten Teil der Luftführung (22) mündet.
